# EUROPEAN PATENT APPLICATION

(11) **EP 4 692 878 A1**
(43) Date of publication of application: **11.02.2026**
(21) Application number: 25195120.8
(22) Date of filing: 11.08.2025
(51) Int. Cl.: G02B 6/38

(54) **MODULAR CONNECTOR HOUSING**

(30) Priority: 09.08.2024 US 202418799654
(71) Applicant: ODU GmbH & Co KG., 84453 Mühldorf a. Inn (DE)
(72) Inventor: HOBMAIER, Christian, 84453 Muehldorf a. Inn (DE); SCHABERL, Josef, 84453 Muehldorf a. Inn (DE); WEIDENSPOINTNER, Rudolf, 84453 Muehldorf a. Inn (DE)
(74) Representative: Huebner, Stefan Rolf

(57) **Abstract**

A module (2) for a connector housing (1) which can be assembled with one or more other stacking module(s) (2) in a stack to form the connector housing (1), the stacking module (2) comprising a connector part support (5) with an upper face and a lower face. At a first side of the connector part support (5) an upper side wall (6) extends away from the connector part support's (5) upper face, and/or at a second side of the connector part support (5) a lower side wall (7) extends away from the lower face of the connector part support (5). A first fastener and a first counter fastener are provided at one of the first and a second sides of the connector part support (5). The connector part can be an electrical contact pin, an electrical contact bushing, an edge card, a coaxial connector part, a mating part of an optical fibre contact and a mating part of a fluid conduit. Moreover, a set comprising the stacking modules and a connector housing (1) assembled of the modules (2) of the set.

## Description

### Field of the invention

The invention relates to a stacking module for a connector housing which can be assembled with one or more other stacking modules in a stack to form the connector housing. The invention moreover relates to a lower end module for a connector housing which can be assembled with the stacking module or with an upper end module to form the connector housing, and to an upper end module for a connector housing which can be assembled with the stacking module or with the lower end module to form the connector housing. The invention further related to a set of a stacking module and a connector part, a set of modules for a connector housing, and to a connector housing assembled from the set.

### Background of the invention

From US 10620383 B2, A modular optical connector is known that includes a plurality of coupled optical ferrule support modules. Each optical ferrule support module comprises interlocking module connecting features such as dovetails to couple each ferrule support module with one or more neighbouring ferrule support modules for stacking multiple ferrule support modules. A ferrule support module can hold one or more optical ferrules and one or more optical waveguides. A spring-loaded bend in the waveguides provides mating force and allows ferrule floating during connection.

DE 102021116837 A1 and DE 102020123187 A1 disclose printed circuit board connectors composed of several single-pole segments that can be fastened together by attaching the housings of adjacent segments to each other. The housings are attached to their neighbours by means of snap-fitting, screwing, or other types of fastening. A left and a right end segment is combined with any number of middle segments.

Another modular printed circuit board connector is known from DE 102017119287 B4. The connector is assembled by inserting a connecting bar into the dovetail grooves on individual connector modules.

DE 102014105386 A1 describes a stackable insulating housing which has latching hooks on one side, and corresponding latching holes on the other side to attach adjacent housings to each other. A similar stackable housing is disclosed in DE 10100081 B1.

In a similar fashion, a plurality of stacked housings of connector members forms the connector disclosed in US 20220376428 A1. The housings are held together by lock portions of one housing engaging with recesses on an adjacent housing. A connector of this type is also disclosed in EP 1710864 A2. The connector housing of EP 1033786 B1 comprises of a plurality of sub-housings that are stacked together by loop portions and matching retaining claws.

From EP 1305850 B1, an electrical connector is known the housing of which has on each of its two narrow longitudinal sides a recess with a projecting rib. Several of these connectors can be combined into a multi-connector by pressing a retention rod into the lateral engagement openings, where the ribs engage into mating grooves of the retention rod.

US 10459173 B2, US 10989881 B2, US 11131813 B2, WO 2020003137 A1, WO 2017066139 A1 and WO 2018116135 A1 disclose optical connectors that comprises multiple optical ferrules in a shared housing. From US 11067756 B2 a stackable adapter is known that has opposing ports configured to accept fibre optic connectors. Individual stackable adapters can be combined to form a stackable adapter assembly by means of protrusions and recesses on their outside.

From US 20050031290 A1 an assembly for stacking optical fibres is known, where a plurality of ferrule plates are vertically registered by means of alignment pins an holes. The fibres are bonded to the plates and the plates are bonded together with epoxy resin.

EP 4096027 A1 discloses a circular modular pluggable electrical connector designed to support high-density contact arrangements with low mating forces, particularly suited for push-pull casing configurations. The connector comprises a substantially circular casing which houses a terminal unit. This terminal unit receives, in a receiving cavity, guided by guide rails a plurality of terminal modules in a stacked arrangement. The terminal modules may vary in height to accommodate different configurations.

From US 11437752 B2, a connector is known where multiple terminal fittings of a flat cable are held between an upper and a lower housing. Elastic, cantilever-shaped locking pieces on one housing hook onto locking portions on the other housing to prevent separation. Moreover, protruding piece portions on one housing and protruding piece restriction portions on the other housing are provided to suppress looseness, and pins and relief holes align and secure the flat cable.

### Object of the invention

It is an object of the present invention to provide an improved stacking module for a connector housing which can be assembled with one or more other stacking modules in a stack to form the connector housing. It is a further object of the present invention to provide an improved lower end module for a connector housing which can be assembled with the stacking module or with an upper end module to form the connector housing, and to provide an improved upper end module for a connector housing which can be assembled with the stacking module or with the lower end module to form the connector housing. The invention further aims at providing an improved set of a stacking module and a connector part, at providing an improved set of modules for a connector housing, and at providing an improved connector housing assembled from the set.

### Solution according to the invention

In the following, any reference to one (including the articles "a" and "the"), two or another number of objects is, provided nothing else is expressly mentioned, meant to be understood as not excluding the presence of further such objects in the invention. The reference numerals in the patent claims are not meant to be limiting but merely serve to improve readability of the claims.

According to a first aspect of the invention, the problem is solved by a stacking module for a connector housing with the features of claim 1. The stacking module can be assembled with one or more other stacking module(s) in a stack to form the connector housing, the stacking module comprising a connector part support with an upper face and a lower face, wherein at a first side of the connector part support an upper side wall extends away from the connector part support's upper face, and/or at a second side of the connector part support a lower side wall extends away from the lower face of the connector part support, and wherein a first fastener and a first counter fastener are provided at one of the first and a second sides of the connector part support.

It is an achievable advantage of the stacking module that an arbitrary number of stacking modules can be assembled in a stack to form the housing. In particular, it is achievable that stacking modules with different connector part supports for different contacts elements can be assembled in a stack to form the housing.

It is also achievable that connector parts that are held fixedly by the connector part support of only one stacking module can be combined with connector parts that are held between a pair of connector part supports provided by adjacent stacking modules, thereby expanding the range of applications of housings obtained with stacking modules according to the invention. In particular, the side wall can in cooperation with a side wall of an adjacent module, provide a cavity, which can house a connector element, further adding to the utility of the stacking module.

The term "housing" as used herein refers to an assembly of the stacking modules, which assembly a plurality of connector part supports for connector parts. In the context of the present invention, the expression "one of" with regard to the first side and the second side being provided with a (counter) fastener is meant to indicate that either the first side or the second side can be provided with such (counter) fastener.

In the context of the present invention, a "connector part" is a part of a connector that can mate with a counter connector part of another connector to transport electrical power, one or more electrical, electromagnetic or optical signal(s), or one or more fluid(s) to the counter connector part. Examples of connector parts include an electrical contact pin for contacting an electrical contact bushing, an electrical contact bushing for contacting an electrical contact pin, an edge card comprising for electrically contacting one or more matching spring contacts, a coaxial element comprising a pin and a bushing for contacting a matching pair of co-axial bushings, a mating part at the end of an optical fibre arranged for contacting a matching mating part at another optical fibre end, and a mating end of a fluid conduit for mating with an matching mating end of another fluid conduit.

The term "Connector part support" as used herein refers to a part of the module that can support or hold one or more connector parts. The connector part support may support or hold one, two, three, four, five or more connector parts, typically but not necessarily of the same kind. A "Side" of the connector part support in the context of the present invention is a part on the outside of the connector part support that extends both in the length direction of the connector part support, and between the upper face and the lower face of the connector part support. As used herein, the term "length direction" is the direction from a front of the stacking module to a back of the stacking module. The "front" of the stacking module is where the connector part(s) can be exposed for mating with a matching counter connector part. The "back" of the stacking module is where typically a cable that leads to the connector part leaves the stacking module.

As used herein, the term "fastener" and "counter fastener" refer to a pair of fastening elements that are complementary in the sense the fastener of the module can cooperate with the counter fastener of another, preferably adjacent module to fasten the two modules together in the assembling of the two modules in a stack. Advantageously, the fastener or counter fastener can cooperate with a counter fastener or fastener, respectively, of an adjacent stacking module. A fastener or counter fastener being "provided at" a side means that the fastener or counter fastener is near to the side and is, directly or indirectly, attached to the side, or that the fastener or counter fastener even forms part of the side. For example, the fastener or counter fastener may be a latching hook that extends from the side (ie, the fastener or counter fastener is directly attached to the side) or from a side wall that, in turn, extends from the side (ie, the fastener or counter fastener is indirectly attached to the side). Similarly, the fastener or counter fastener can for example be a recess or a protrusion on the side, or on a side wall that extends from the side. The above definition also includes cases in which a side wall double as a fastener or counter fastener.

According to a second aspect of the invention, the problem is solved by a set of at least one stacking module and at least one connector part with the features of claim 6. The connector part is from the group comprising an electrical contact pin, an electrical contact bushing, an edge card, a coaxial connector part, an optical fibre contact and a fluid port.

It is an achievable advantage of this embodiment of the invention that a great variety of different connectors can be obtained, and that, by combining stacking modules with different connectors, different kinds of connectors can be combined to obtain connectors best fit for a particular application.

According to a third aspect of the invention, the problem is solved by a lower end module for a connector housing with the features of claim 12. The lower end module can be assembled with a stacking module to form the connector housing. The lower end module comprises a connector part support with an upper face, wherein at a first side of the connector part support an upper side wall extends away from the connector part support's upper face. A first fastener is provided at one of the first side and a second side of the connector part support so that the first fastener of the lower end module can cooperate with the first counter fastener of the stacking module to assemble the lower end module with the stacking module.

It is an achievable advantage of the lower end module that as it does not need to provide means for the attachment of a module below the lower end module, construction be simplified. Moreover, space can be saved. Also, the lower end module can be provided with means for accommodating the housing inside an outer housing of a connector.

According to a fourth aspect of the invention, the problem is solved by an upper end module for a connector housing with the features of claim 13. The upper end module can be assembled with the stacking module or the lower end module to form the connector housing. The upper end module comprises a connector part support with a lower face, wherein at a second edge of the connector part support a lower side wall extends away from the connector part support's lower face, characterised in that a second fastener is provided at one of the second edge and a first edge of the connector part support so that the second fastener of the upper end module can cooperate with the second counter fastener of the stacking module to assemble the upper end module with the stacking module.

Similarly to the case of the lower end module, it is advantageously achievable with the upper end module that construction be simplified, because it does not need to provide means for the attachment of a module above the upper end module. Moreover, space can be saved. Also, the upper end module can be provided with means for accommodating the housing inside an outer housing of a connector.

According to a fifth aspect of the invention, the problem is solved by a set for assembling a connector housing with the features of claim 14. The set comprises at least two stacking modules, or at least two modules of the group of modules comprising a stacking module, a lower end module and an upper end module.

According to a sixth aspect of the invention, the problem is solved by a housing with the features of claim 15. The housing is assembled from the set.

### Preferred embodiments of the invention

Preferred features of the invention which may be applied alone or in combination are discussed in the following and in the dependent claims.

Whenever in the following reference is made to a "module" without specifically referring to a stacking module, a lower end module or an upper end module, this shall be considered to refer to any one of a stacking module, a lower end module or an upper end module.

At least two, preferably three or more, more preferably more than 5, even more preferably more than 11 modules can be assembled in a stack to form the connector housing. Also, each of the lower end module and the upper end module can, instead of being assembled with an adjacent stacking module, be assembled with each other. A preferred stacking module can be assembled with an identical stacking module.

A preferred connector part support is a connector part holder. As used herein, the term "connector part holder" refers to a connector part support that can fixedly hold one or more connector parts without the help of another connector part support to cooperate with.

For this purpose, the connector part holder preferably comprises one or more through holes, each through hole to accommodate one or more connector parts. The through hole preferably extend along the length direction of the connector part support. The connector part support may comprise one, two, three, four, five or even more of such through holes.

A preferred through hole has an essentially cylindrical cross section. This can be particularly advantageous for the connector part support to fixedly hold an electrical contact pin, an electrical contact bushing, a coaxial element, a single optical fibre or a fluid conduit, all of which typically have an essentially circular external cross section. Alternatively, the trough hole can be rectangular. Such rectangular through hole can be particularly advantageous for the connector part support to fixedly hold an edge card or means for receiving an edge card.

In some embodiments of the invention, the connector part support can support one or more connector parts from the top or the bottom and can cooperate with another stacking module that can support the one or more connector parts from the bottom or the top, respectively, to fixedly hold the one or more connector parts. This allows for a mode of assembly of the two modules, in which a connector part is placed onto a connector part support of a stacking module and is fixed between the two modules by means of the connector part support of the other stacking module.

For this purpose, the connector part support preferably comprises one or more grooves that extend along the length direction of the connector part support. The connector part support may comprise one, two, three, four, five or even more of such grooves. The preferred groove is open towards the front and/or back of the connector part support.

The preferred groove is trough shaped, more preferably with an essentially semi-cylindrical cross section. This can be particularly advantageous for the connector part support to fixedly hold an electrical contact pin, an electrical contact bushing, a coaxial element, a single optical fibre or a fluid conduit, all of which typically have an essentially circular external cross section. Alternatively, the groove can be rectangular. The latter can be particularly advantageous for the connector part support to fixedly hold an edge card or means for receiving an edge card.

The through hole and the groove can vary in radius. In a preferred through hole a change in radius provides for one or more shoulders a connector part can abut against when introduced into the through hole in order to aid positioning in the length direction and anchoring of the connector part inside the through hole.

A preferred connector part support doubles as an insulating body for electrically insulating the connector part(s). For this purpose, it is preferably made of an electrically insulating material such as plastic. Similarly, the material of the connector part support may be tinted to provide for optical shielding, or it may be provided with an electromagnetic shielding, for example in the form of a metal layer or web.

In some embodiments of the invention, the connector part support is provided with projections to anchor the connector part to the connector part support - be it in a connector part holder or in a combination of adjacent connector part supports that cooperate to fixedly hold the one or more connector parts - by form fit or press fit. Such projection can be of the same material as the bulk of the connector part support, typically a plastic material, or it can be of a different material, for example metal.

A projection, for example in the form of a metal tongue, extends out of the connector part support - preferably out of the through hole's wall into the through hole or out of the groove's wall into the groove - to fix the connector part in the through hole. The projection can, for example, act as a latching element that cooperates with a shoulder on the outside of the connector part to fix the connector part in or between the connector part support(s) by means a form fit. Accordingly, the preferred connector part is provided with at least one shoulder on its outside to cooperate with a projection of the connector part support.

Conversely, in some embodiments of the invention the connector part support comprises at least one shoulder to cooperate with at least one resilient tongue of the connector part to anchor the connector part either in the connector part holder in a combination of adjacent connector part supports that cooperate to fixedly hold the one or more connector parts.

Some connector parts according to the invention are provided with one or more barbs on its outside to anchor itself or themselves in the surface of the connector part support, in particular the surface of a through hole of the connector part holder or a groove of the connector part support. A barb may extend annularly around the circumference of a connector part, for example a contact pin or bushing. The connector part may comprise two, three, four or more barbs.

A connector part support can carry or hold one, two, three four or more connector parts. In some embodiments, the connector part is one of a group consisting of: an electrical contact pin, for example a spring-loaded pogo pin; an electrical contact bushing, for example a spring contact socket, for receiving a contact pin; a flat contact to cooperate with a spring-loaded pogo pin contact pin or a spring contact; an edge card comprising a PCB with one or more flat contacts in the form of electrical conductor traces for electrically contacting one or more matching spring contacts; a coaxial element comprising a pin and a bushing or a pair of co-axial bushings; a mating part of an optical fibre, which can for example be the flat end of an optical fibre or an optical element such as a lens or a prism facilitating the transfer of light between the optical fibre and an optical element or an optical fibre of the counter connector part; a mating part of a fluid conduit, which may include a seal or the like to prevent leakage of fluid as it is transferred between the connector part and the counter connector part. Moreover, the preferred connector part comprises an electrical cable attached to the pin, bushing, edge card or coaxial element, an optical cable attached to the optical fibre mating part, or a fluid conduit attached to the fluid conduit mating part. Typically, the cable or conduit passes through the back of the module.

In some embodiments of the invention there are modules in which, when combined there is no space between the connector part support of the adjacent modules. Preferably, such modules are modules that can, alone or in combination with an adjacent module, fixedly hold one or more connector parts.

In some embodiments of the invention there are module in which the upper face of the connector part support and an upper side wall of the module cooperates with the lower face of the connector part support and a lower side wall of an adjacent module to provide a cavity between the connector part supports and the side walls. Thus, the above-mentioned the connector part support face and side wall of each module effectively form a half-cavity. This allows for a mode of assembly of the two modules, in which a connector part is placed into one half cavity (for example the upper half cavity) of a stacking module, the cavity is then closed by a complementary half-cavity (in the example the lower half-cavity) of another stacking module.

It is preferable, that a half-cavity is at least partly open. In this context, "partly open" means that opposite at least parts of the upper side wall (ie, the side wall on the first side of the connector part support) or lower side wall (ie, the side wall on the first side of the connector part support), there is no corresponding side wall part on the second or fist side of the connector part support, respectively. This has the advantage that a connector part can be inserted into the half cavity without being hindered by such corresponding side wall. This embodiment thus facilitates assembly of the housing.

Thus, in the case of an upper side wall extending away from the upper face of the connector part support on the first side of the connector part support, at the second side of the connector part support opposite at least parts of the upper side wall, the connector part support is at least partly open. Likewise, in the case of a lower side wall extending away from lower face of the connector part support on the second side of the connector part support, at the first side of the connector part support opposite at least parts of the lower side wall, the connector part support is at least partly open. Preferably, opposite at least 20%, more preferably at least 40 %, even more preferably at least 60 %, even more preferably at least 80 %, even more preferably the entire upper or lower side wall, there is no corresponding side wall on the second or fist side, respectively. Most preferably, the half-cavity is not only partly but entirely open, ie, opposite the upper side wall or lower side wall, there is no corresponding side wall on the second or fist side of the connector part support, respectively. In a preferred module with two half-cavities, preferably both half-cavities are open.

In some embodiments of the stacking modules according to the invention, there are two side walls on opposite sides of the connector part support. Preferably, at a first side of the connector part support an upper side wall extends away from the connector part support's upper face, and at a second side of the connector part support a lower side wall extends away from the lower face of the connector part support.

Such stacking modules provide two half-cavities, an upper half-cavity and a lower half-cavity. Advantageously, his allows for a mode of assembly, in which a connector part is placed into one half-cavity (for example the upper half cavity) of a stacking module, the cavity is then closed by a complementary half-cavity (in the example the lower half-cavity) of another stacking module, and another part of the connector is placed into the other half-cavity (in the example the upper half-cavity) of this other stacking module. This other half-cavity can then be closed with a complementary half-cavity (in the example the lower half-cavity) of yet another stacking module and so on for an arbitrary number of stacking modules.

In some embodiments of the invention - preferably in those with two side walls on opposite sides of the connector part support, thereby providing two half cavities - the connector part support has no means such a through holes or grooves for fixedly holding a connector part. Rather, the connector part support preferably is essentially a flat base plate.

In the stacking module, at one of the first side and the second side of the connector part support a first fastener and a first counter fastener are provided. This has the advantageous effect that the first fastener of the module can cooperate with a first counter fastener of an adjacent, stacking module to fasten the two modules together in the assembling of the two modules in a stack. Similarly, the first counter fastener of the module can cooperate with a first fastener of an adjacent, identical stacking module to fasten the two modules together in the assembling of the two modules in a stack. The adjacent stacking module may be stacked on top of the stacking module, or the stacking module may be stacked on top of the adjacent stacking module.

Preferably, at the other of the first and the second side of the connector part support of the stacking module, a second fastener and a second counter fastener are provided. As in the case of the first fastener and counter fastener, this has the advantageous effect that the second fastener of the module can cooperate with a second counter fastener of an adjacent, identical stacking module to fasten the two modules together in the assembling of the two modules in a stack. Similarly, the second counter fastener of the module can cooperate with a second fastener of an adjacent, identical stacking module to fasten the two modules together in the assembling of the two modules in a stack. Again, the adjacent stacking module may be stacked on top of the stacking module, or the stacking module may be stacked on top of the adjacent stacking module. Fastening adjacent modules together not only at one side of the connector part support but at the two opposite sides can render the fastening of the two modules more secure and reliable.

In a preferred stacking module, the fastener is for fastening the module to an adjacent module on the top a of the module, while the corresponding counter fastener is for fastening the module to an adjacent module on the bottom of the stacking module or vice versa. In contrast, the lower end module and the upper end module have an adjacent module only on its top or bottom, respectively.

Accordingly, while the lower end module has a first fastener at one of the first side and the second side of the connector part support, the lower end module preferably lacks a counter fastener at this one side. At the other side of the first side and the second side of the connector part support of the lower end module, a second counter fastener is provided to cooperate with a second fastener of the adjacent module. Yet, preferably, the lower end module lacks a fastener at this other side.

Similarly, while the upper end module has a second fastener at one of the second side and the first side of the connector part support, the upper end module preferably lacks a counter fastener at this one side. At the other side of the second side and the first side of connector part support of the upper end module, a first counter fastener is provided to cooperate with a first fastener of the adjacent module. Yet, preferably, the upper end module lacks a fastener at this other side.

The preferred fastener is one element of the group consisting of a latching hook and a latching edge which can cooperate with the latching hook to form a latching connection, and the preferred counter fastener is the other element of the group. The preferred latching hook can snap onto the latching edge to establish the latching connection. Preferably, the fastener is the latching hook, and the counter fastener is the latching edge. The preferred latching hook comprises of an elastically resilient tongue portion, and a hook portion that extends at an approximate right angle towards the inside of the stacking module.

Yet, the invention also encompasses pairs of a fastener and matching counter fastener that operate by other principles of connection. For example: The fastener and the counter fastener may rely on a clamping connection as is, ia, known from the famous LEGO bricks; the fastener may be one element of the group consisting of a groove (for example a dove tail groove) and a matching projection which can held in the groove by a force fit or a form fit, as is, ia, known from the famous Fischertechnik components, and the preferred counter fastener is the other element of the group; the fastener may be one element of the group consisting of the two components of a bayonet lock, and the preferred counter fastener is the other element of the group;; or the fastener may be one element of the group consisting of a screw and a nut, and the preferred counter fastener is the other element of the group.

The fastener and the counter fastener preferably can connect reversibly, ie, unfastenably. It is an achievable advantage of a pair of fastener and counter fastener that can be unfastened, that respective modules after assembly can be detached again to be disassembled. Thus, if, for example, a connector part housed in a cavity formed by two adjacent modules needs to be replaced, the connection of the fasteners can be reversed to detach the two modules from each other, thereby obtaining access to the connector part. After replacing the connector part, the two modules can be re-assembled. For the purpose of unfastening, the preferred latching hook is provided with a handle edge that is accessible from the outside of the module even after the modules has been assembled with another module.

Preferably, the side wall along its associated side of the connector part support is interrupted to give way for the fastener and/or the counter fastener. Moreover, one of the fastener and the counter fastener preferably extends beyond the distal end of the side wall in order to be able to connect with the other of the fastener and the counter faster of the adjacent module. As used herein, the term "distal end of the side wall" refers the side of the side wall that is opposite the end which the side wall shares with the connector part support. For example, the preferred latching hook extends away from the end of the connector part support essentially in parallel to the adjacent parts of the side wall. More preferably, at least with its hook portion the latching hook extends beyond the distal end of the side wall so that it can snap onto the latching edge of the adjacent module.

It is preferred, though not necessary, that if the first fastener is one element of a group of elements (such as one of the groups listed above, for example latching hook and latching edge) and the first counter fastener is the other element of this group, then the second fastener likewise is the one element, and the second counter fastener is the other element of the group. Yet, the invention also encompasses embodiments in which the elements are reversed, for example the first fastener being a latching hook and the second fastener being a latching edge, or where the first fastener and counter fastener are entirely different types of fasteners (for example a latching connection) than the second fastener and counter fastener (for example a clamping connection).

The preferred pairs of fastener and counter fastener can connect the modules rigidly. In a preferred stacking module, one of the first side of the connector part support and the distal side of the upper side wall is provided with at least one protrusion and the other of the first side of the connector part support and the distal side of the upper side wall is provided with a recess so that the protrusion or recess can cooperate with the recess or protrusion of an adjacent module when the two modules are assembled. Advantageously, the protrusion(s) and recess(es) can contribute to fixedly aligning the stacking module with an adjacent stacking module. In the preferred lower end module, the distal side of the upper side wall is likewise provided with at least one protrusion or recess, preferably in a manner identical to the upper side wall of the stacking module so that the protrusion or recess can cooperate with the recess or protrusion of an adjacent module when the two modules are assembled. Yet, the lower end module typically does not require recess(es) or protrusions at the first side of the connector part support. Conversely, the preferred upper end module has at least one recess or protrusion at the first side of the connector part support, preferably matching the protrusion(s) or recess(es) of the upper side wall of the stacking module so that the recess or protrusion can cooperate with the protrusion or recess of an adjacent module when the two modules are assembled.

Likewise, in a preferred stacking module, one of the second side of the connector part support and the distal side of the lower side wall is provided with at least one protrusion and the other of the second side of the connector part support and the distal side of the lower side wall is provided with a recess so that the protrusion or recess can cooperate with the recess or protrusion of an adjacent module when the two modules are assembled. In a preferred lower end module, at least one recess or protrusion is provided at the second side of the connector part support, preferably in a manner matching the protrusion(s) or recess(es) of the lower side wall of the stacking module so that the recess or protrusion can cooperate with the protrusion or recess of an adjacent module when the two modules are assembled. Conversely, the distal side of the lower side wall of the preferred upper end module has at least one protrusion or recess, preferably matching the recess(es) or protrusion(s) at the second side of the connector part support of the stacking module so that the protrusion or recess can cooperate with the recess or protrusion of an adjacent module when the two modules are assembled. Yet, the upper end module typically does not require recess(es) or protrusion(s) at the second side of the connector part support.

The preferred protrusion is tapered and/or comprises a lead-in side at its open end, ie, the end that extends towards the recess of the adjacent stacking module. Similarly, a preferred recess is tapered and/or comprises a lead-in side at its opening.

In the embodiments of the invention in which two adjacent modules produce a cavity for a connector part, the preferred connector part held in the cavity is an end section of a cable. In a preferred stacking module and/or a preferred lower end module, the upper face of the connector part support can support a lower face of an end section of a cable. In a preferred stacking module and in a preferred upper end module, the lower face of the connector part support can support an upper face of an end section of a cable.

The cable preferably is a flat ribbon cable. The preferred flat ribbon cable comprises multiple, preferably more than two, for example 3, 4, 8, 12 or 16 parallel strands. The preferred cable comprises a coupling unit (sometimes also referred to as a ferrule) at its end, which coupling unit can connect to a mating coupling unit of another cable. Preferably, at a distance from the coupling unit a collet (sometimes also referred to as a retainer) is fixedly attached to the cable's end section. Particularly preferably the cable is an optical cable, each strand being an optical wave guide. As used herein, the term "optical wave guide" refers to an optical element that propagates signal light. An optical waveguide comprises at least one core with a cladding, wherein the core and cladding are configured propagate light within the core, eg, by total internal reflection. An optical waveguide may, for example, be a single or multi-mode waveguide, a single core fibre, a multi-core optical fibre, or a polymeric waveguide.

A preferred side wall extends beyond the length of the first and second sides of the connector part support. Thereby, it is achievable that the sidewall essentially closes off its side of the module.

The lower side wall of the preferred stacking module comprises a lower coupling unit support member for supporting a lower face of a coupling unit of a connector that can be held in the module. The preferred lower coupling unit support member is a projection that extends from the lower side wall towards the inside of the stacking module. Similarly, the upper side wall of the preferred stacking module and a preferred lower end module comprises an upper coupling unit support member for supporting an upper face of a coupling unit of a connector that can be held in the module. The preferred upper coupling unit support member is a projection that extends from the upper side wall towards the inside of the stacking module.

The lower and the upper coupling unit support members can hold the coupling unit, preferably the coupling unit of a cable end section the lower face of which is supported by the upper face of the module's connector part support, in a fix vertical position. If two adjacent modules are stacked together, the lower coupling unit support member preferably doubles as an upper coupling unit support member of an adjacent connector part, and vice versa. Thereby it is achievable that the coupling unit is supported on both sides, the side of the upper side wall and the side of the lower side wall. Preferably, the lower coupling unit support member of the stacking module and the upper coupling unit support member of an adjacent coupling module are arranged such that if the two modules are assembled into a stack, the coupling unit is movable in the longitudinal direction of the end section of the cable.

The lower side wall of the preferred module comprises a lower collet support member for supporting a lower face of a collet of a connector that can be held in the module. The preferred lower collet support member is a projection that extends from the lower side wall towards the inside of the stacking module. Similarly, the upper side wall of the preferred stacking module and a preferred lower end module comprises an upper collet support member for supporting an upper face of a collet of a connector that can be held in the module. The preferred upper collet support member is a projection that extends from the upper side wall towards the inside of the stacking module.

The lower and the upper collet support members can hold the collet, preferably the collet of a cable end section the lower face of which is supported by the upper face of the module's connector part support, in a fix vertical position. If two adjacent modules are stacked together, the lower collet support member preferably doubles as an upper collet support member of an adjacent connector part, and vice versa. Thereby it is achievable that the collet is supported on both sides, the sider of the upper side wall and the side of the lower side wall.

Preferably, the module moreover comprises one or more backward stop(s) for the collet to prevent the collet from moving, in a longitudinal direction of the cavity, as pressure is applied onto the coupling unit, as is typically the case of the coupling unit is coupled with another coupling unit. Moreover, the module preferably comprises a forward stop for the collet. Preferably, the module's upper side wall comprises a forward stop and/or a backward stop for the collet that can be held in the module. The preferred forward stop and/or backwards stop is integrated with the upper and lower collet support members.

Preferably, at least two elements of the group of elements comprising (1) the coupling unit support members (2) the collet support members, and (3) the connector part support in cooperation urge the end section of the cable between the coupling unit and the collet in a curved shape. The radius of curvature preferably extends in a plane that is spanned by the stacking direction of the stack and the longitudinal direction of the cable. Thereby it can be achieved that in cooperation with the backward stop the cable can exert a spring force on the coupling unit. The spring force can elastically bias the coupling unit against a matching counter coupling unit to ensure a reliable connection between the coupling unit and the counter coupling unit.

A preferred set for assembling a connector housing comprises different kinds of stacking modules in the sense that the kinds of stacking modules differ in that they are adapted for different connector parts. As used herein, connector parts "differ" from each other if they are not interchangeable for the intended use with the same counter connector parts. In other words, they differ if they cannot be attached to the same counter connector part or can be attached to the same counter connector part but do not provide the same functionality. For example, connector parts of different modalities, such as a coupling unit for an optical wave guide, an electrical pin or socket connector part, a coaxial connector part, and a mating part of a fluid conduit are different from each other. Similarly, connector parts of the same modality that are not interchangeable due to different gender or different dimensions are different connector parts. Also, connector parts of the same modality that have a different number of individual optical mating parts, electrical contacts or fluid mating parts are different even if they can be attached to the same counter connector part, because they provide different functionality and are thus not interchangeable. A preferred set comprises a module with a connect part support part that can, alone or in combination with an adjacent module, fixedly hold one or more connector parts, and module with a half cavity. In a preferred housing, these modules are assembled such that the connect part support of the former module sits in the half cavity of the latter module.

In some embodiments of the set for assembling a connector housing, every stacking module of the set can be assembled with every other stacking module of the set. Preferably, every upper end module can be assembled with every stacking module. Preferably, every lower end module can be assembled with every stacking module. Preferably, every upper end module can be assembled with every lower module.

Preferably, the height of different stacking modules of a set for assembling a connector housing are multiples of an identical or integer multiples of a minimum height of a stacking module, including the multiple 1. Preferably, the number of multiples is small, for example the set only comprises multiples 1, and 2, or only multiples 1, 2 and 3, or only multiples 1, 2, 3 and 4. In other words, higher modules have twice, three times of four times, respectively, the height of the lowest stacking module. It is an achievable advantage of this embodiment of the invention that the height of the housing is always a multiple of the heights of the stacking module, plus the heights of the upper and/or lower end modules where applicable.

In some embodiments of the invention, the connector housing according to the invention forms part of a connector part, preferably a male or a female connector part. Preferably the connector housing is placed inside an outer housing of the connector part. Preferably, the connector housing is biased against the outer connector housing towards the connector face of the connector part, where the connector part can be attached to a mating connector part. For this, the preferred connector housing is arranged slidingly in the outer connector housing. A biasing force preferably is provided by an elastic element, for example a spring such as a coil spring.

### Brief description of the drawings

In the following, further preferred embodiments of invention are illustrated by means of examples. The invention is not limited to these examples, however.

The drawings schematically show:
- Figure 1A: A perspective view of the upper side of a stacking module;
- Figure 1B: A perspective view of the lower side of the stacking module of Figure 1A;
- Figure 1C: A perspective view of the lower sides of two stacking modules and two connector parts;
- Figure 1D: A perspective view from below of a connector housing comprising an assembly of the two stacking modules shown in Figure 1C in a stack and the two connector parts shown Figure 1C;
- Figure 2A: On the left a cross-sectional view of two joined connector housings provided with connector parts, each housing formed by assembling a lower end module, seven stacking modules, and an upper end module in a stack and their connector parts; and on the right in a plane that extends perpendicularly to the cross-sectional plane of the view on the left, an indication A-A of the course of the cross section shown on the left;
- Figure 2B: A perspective view of the connector housing of Figure 2A with male connector parts;
- Figure 2C: A perspective view of the connector housing of Figure 2A with female connector parts;
- Figure 3: A perspective view of the two lowest modules of the connector housing of Figures 2A to 2B with their respective cable ends.
- Figure 4A: A perspective view of the top of the lower end module of Figures 2A to 2C and 3;
- Figure 4B: A perspective view of the bottom of the lower end module of Figures 2A to 2C, 3 and 4A;
- Figure 4C: A side view of the right side of the lower end module of Figures 2A to 2C, 3, 4A and 4B;
- Figure 5A: A perspective view of the top of the upper end module of Figures 2A to 2C;
- Figure 5B: A perspective view of the bottom of the upper end module of Figures 2A to 2C 5A;
- Figure 6A: A perspective view onto the front of a male connector formed of a connector housing placed in an outer connector housing;
- Figure 6B: A perspective view onto the front of another a male connector formed of a connector housing placed in an outer connector housing;
- Figure 6C: A perspective view onto the front of yet another a male connector formed of a connector housing placed in an outer connector housing;
- Figure 6D: A perspective view onto the front of a female connector for mating the male connector of Figure 6C, the female connector formed of a connector housing placed in an outer connector housing;
- Figure 7: On top, a cross-sectional view of a connector part support with a projection and a shoulder, and a contact pin with a pair of shoulders anchored in horizontal direction by the projection and the shoulder of the connector part support; on the bottom a detail view of the view on top;
- Figure 8A: A contact pin with a projection
- Figure 8B: A contact pin anchored in a module's connector part support;
- Figure 9A: A contact pin with a pair of annular barbes; and
- Figure 9B: A contact pin with a pair of annular barbes anchored in a module's connector part support.

### Detailed description of an embodiment of the invention

In the following description of preferred embodiments of the invention, identical reference numerals refer to identical or similar modules.

A connector housing 1 can be assembled of up to three kinds of modules, a stacking module 2, a lower end module 3 and an upper end module 4. Each module is provided with a connector part support 5 that can, alone or in cooperation with the connector part support of an adjacent module, hold one or more connector parts such as contact pins 33 and bushings 34, coaxial connector parts 35, edge cards 36 and sections of optical cables. The connector housing 1 is typically assembled from bottom to top starting with a lower end module 3, optionally followed by one or more stacking modules, and closed off by an upper end module.

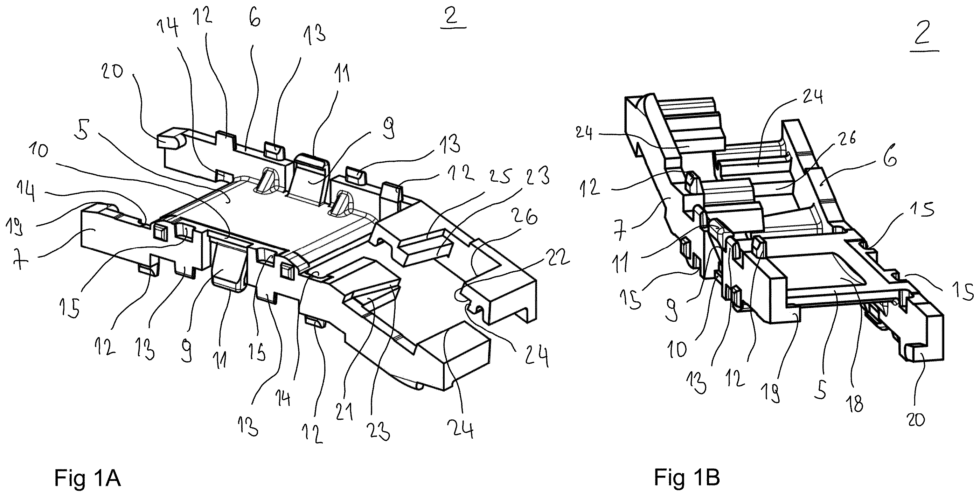

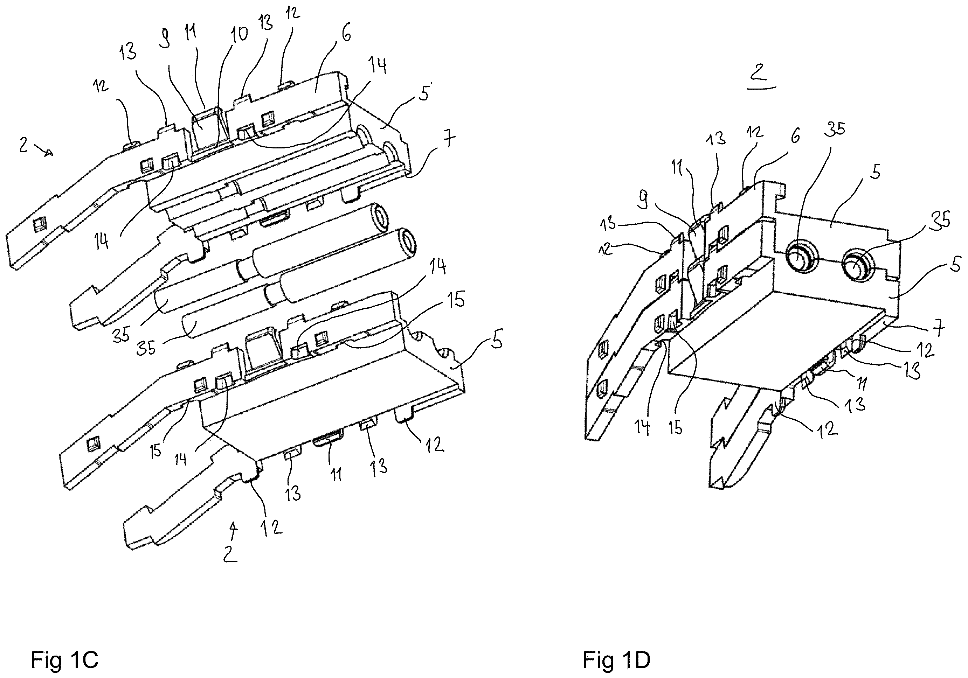

A exemplary stacking modules 2 for a connector housing 1 are shown in **Figures 1A** to **1D****.** Any number of these stacking modules 2 can be stacked upon each other to form the connector housing 1. **Figures 1A** and **1B** show a perspective view of the same stacking module from behind **(****Figures 1A****)** and from the front but rotated on its top **(****Figures 1B****),** and **Figures 1C** and **1D** show, from the front, two stacking modules separate **(****Figure 1C****)** and assembled into a stack to form a housing 1 **(****Figure 1D****).**

The stacking module 2 comprises a connector part support 5, an upper face of which can be seen in **Figures 1A****,** and lower faces of which are shown in **Figures 1B****,** **1C** and **1D****.** The connector part support 5 has two opposite sides, each of which is provided with a side wall 6, 7. At a first side (facing away from the viewer in **Figure 1A****,** on the right in **Figures 1B****,** and facing towards the viewer in **Figures 1C and 1D****)** of the connector part support 5, an upper side wall 6 extends away from the connector part support's upper face, and at a second side (facing towards the viewer in **Figure 1A****,** on the left in **Figures 1B****,** and facing away from the viewer in **Figures 1C and 1D****)** of the connector part support 5, a lower side wall 7 extends away from the lower face of the connector part support 5. As can be seen best in **Figures 1B****,** **1C and 1D****,** the combination of the connector part support 5 and the side walls 6, 7 has a cross section that is similar to the letter "Z" but with right angles between the three sections.

Modules 2 differ with regard to the function of their connector part supports. In some modules the connector part support in cooperation with a side wall and a connector part support and a side wall of an adjacent module can form a cavity to movably hold a connector part; in some modules, the connector part support in cooperation with a connector part support of an adjacent module can fixedly hold one or more connector parts; and in some modules, the connector part support alone can fixedly hold one or more connector parts.

For example, the stacking module 2 shown in **Figures 1A** and **1B** provides two halves of a cavity for receiving a connector part: If onto the stacking module 2 an identical second stacking module 2 is stacked, the stacking module 2 forms one half and the second stacking module 2 forms another half of a cavity for housing the end section 8 of the cable. Similarly, if the stacking module 2 is stacked onto an identical third stacking module 2, the stacking module 2 and the third stacking module 2 form complementary halves of a cavity for housing an end section 8 of a cable. Thus, each pair of adjacent modules 2 forms a separate cavity. The side walls 6, 7 of the stacking module 2 shown in **Figures 1A** and **1B** form two half-cavities. These are fully open as opposite the upper side wall 6 (on the first side of the connector part support 5) there is no corresponding side wall on the second side of the connector part suppor. Likewise, opposite the lower side wall 7 (on the second side of the connector part support 5) there is no corresponding side wall on the first side of the connector part support.

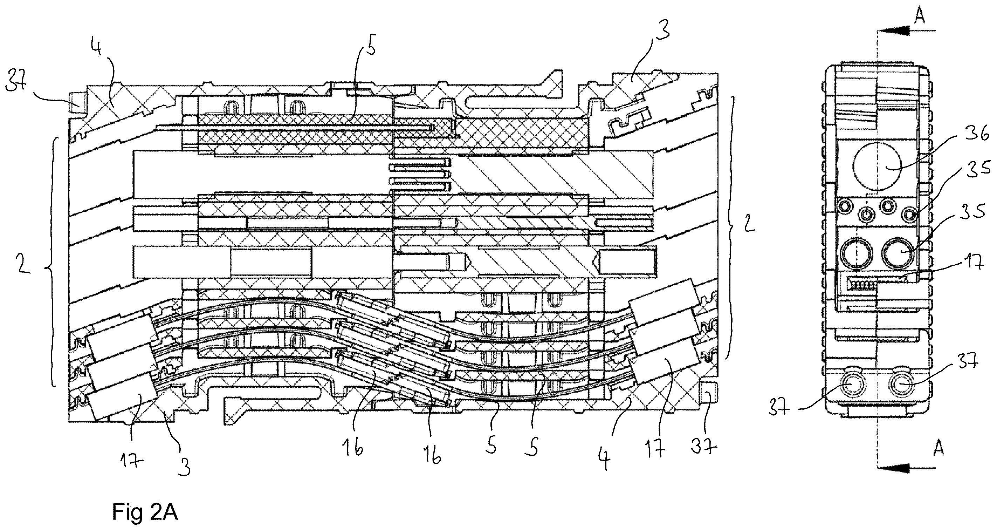

In the lower part of the cross-sectional view on the left of **Figures 2A****,** it can be seen how end sections 8 of optical cables are movably held in the cavities formed by such stacking modules 2 assembled in a stack. To provide a sufficiently large cavity, the connector part support 5 of the stacking module 2 of **Figures 1A** and **1B** have a rather small height, effectively merely forming base plates against which part of the end sections 8 of the optical cable presses. Note that the cross-sectional view on the left if **Figure 2A** shown two stacks of modules, ie two housings 1, joined together at their fronts so that the connector parts are mated. In the right housing 1, all modules 2 are turned on their head. In each housing 1, two end sections 8 of optical cables are held in the cavities formed by adjacent stacking modules 2, and a third end section 8 of an optical cable is held in a cavity formed by a stacking modules 2 and a lower end module (left housing), or a stacking modules 2 and an upper end module 4 (right housing). The lower 3 and upper end modules 4 will be discussed further below.

In contrast to the stacking module 2 of **Figures 1A** and **1B****,** in the stacking modules 2 shown in **Figures 1C** and **1D** the connector part supports can cooperate to fixedly connector parts, namely two electrical contact bushings 34, between them. For this purpose, each connector part is provided with two parallel semicircular grooves. To anchor the bushings 34 in length (front-back) direction, the radii of both bushings 34 and grooves vary along the length direction. As can be seen in **Figure 1D****,** when the two modules are assembled, the space between the upper side wall 6 of the lower module and the lower side wall 7 of the upper module is filled with the connector part supports, so that there is no cavity for a connector part to be moveable held. Rather, the two connector parts are fixed in the grooves of the connector part supports 5.

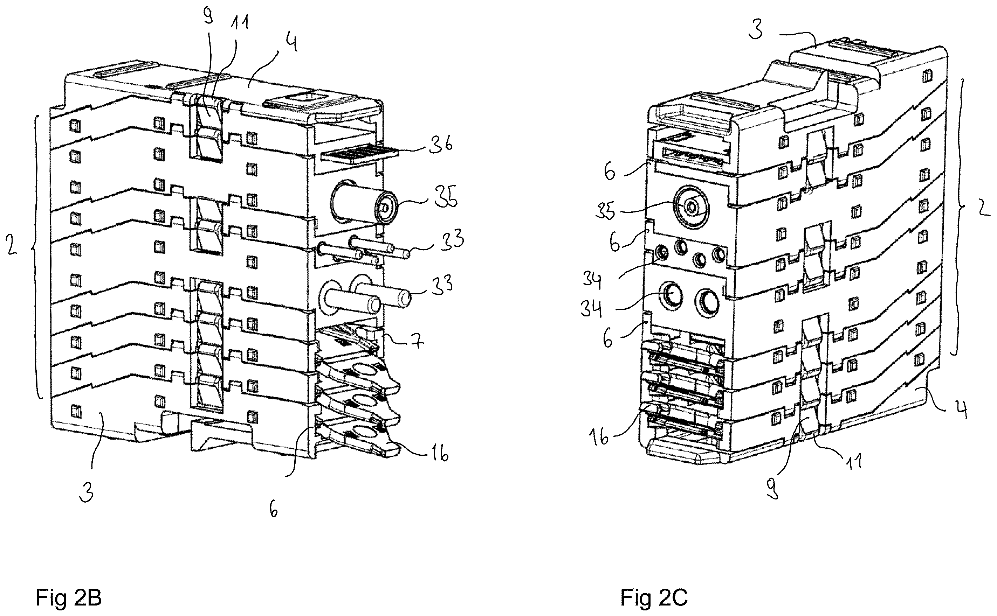

Further in contrast to both the stacking module 2 of **Figures 1A** and **1B** and the stacking module 2 of **Figures 1C** and **1D****, in** **Figures 2A****,** **2B and 2C** some examples of stacking modules 2 are shown connector part support of which alone can fixedly hood one or more connector parts. It is an advantage of these stacking modules 2 that an assembly of two stacking modules to fixedly hold the connector parts can be avoided. For example, the third stacking module from the bottom in **Figure 2C** essentially resembles the two connector parts of **Figure 1D** formed in a single piece. It holds to electrical contact bushings 34. Similarly, the three connector modules above this connector module can, without cooperation with neighbouring connector modules, can fixedly hold four electrical contact bushings 34, a coaxial connector part 35, and an edge card receiving spring contacts. Four further stacking modules that, each on their own, can hold to electrical pin contacts, for electrical pin contacts 33, a coaxial connector part 35, and an edge card 36 are shown in **Figures 2B****.** Cross sections of these connector modules can be seen in **Figure 2A****.** The stacking modules 2 for with two pins, two bushings and the coaxial connector part each have twice the height of the other stacking modules. In the assembled housing of **Figures 2A** to **2C****,** the connector part supports of these modules sit in the half cavities of their adjacent modules.

In the stacking modules shown in **Figures 1A to 3****,** the stacking modules' side walls 6, 7 extend beyond both ends of the first and second sides of the connector part support 5. Moreover, along each of the first and second sides of the connector part support 5, the corresponding side wall 6, 7 is interrupted to give way for a latching hook 9. The latching hook 9 comprise of an elastically resilient tongue portion that extends away from the side of the connector part support essentially in parallel to the adjacent parts of the side wall 6, 7, and a hook portion that extends at an approximate right angle towards the inside of the stacking module 2.

At the base of each latching hook 9, a latching edge 10 is provided so that each latching hook 9 can snap onto a corresponding latching edge 10 of an adjacent stacking module 2 to rigidly assemble the stacking modules 2. Moreover, each latching hooks 9 is provided with a handle edge 11 that is accessible from the outside even after the modules 2 have been assembled. By operating the handle edge 11, a user can release the snap connection between the latching hook 9 and its corresponding latching edge 10.

Each side wall 6, 7 is provided at its distal side with four protrusions 12, 13, two 12 on the inside and two 13 on the outside of the side wall 6, 7, that project away from the sidewall's 6, 7 distal side as an extension of it. On the proximal side of each side wall 6, 7, below each protrusion 12, 13 and on the same side, inside or outside of the side wall 6, 7, as the protrusion, there is a recess 14, 15. Each protrusion can slide into a corresponding recess of an adjacent module when the stacking modules are assembled, thereby adding to the rigidity of the assembly.

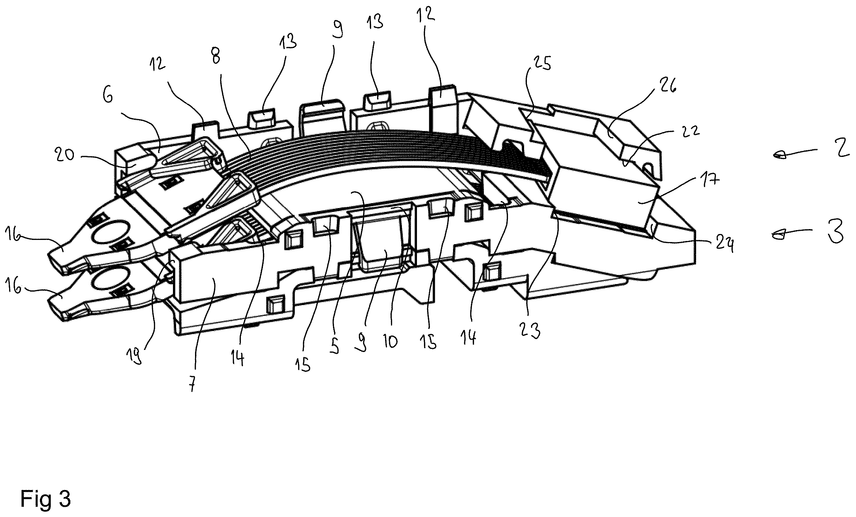

Back to the cavity forming stacking modules of **Figures 1A** and **1B****,** it can best seen in **Figures 2A** and **3** viewed together how the end section 8 of an optical flat ribbon cable extends in the cavity formed by two adjacent modules 2, 3, 4. At its end, the cable end section 8 comprises a coupling unit 16 which can connect to a complementary coupling unit 16 of another cable end section 8. Moreover, at a distance from the coupling unit 16 the cable end section 8 is provided with collet 17 that is fixedly attached to the cable's end section 8. The upper face of module's connector part support 5 supports the lower face of the cable's end section 8, and the bottom of a second module 2, 4 stacked onto the module 3, 2 supports the upper face of the cable's end section 8. For the latter, the connector part support's 5 lower face is provided with a shallow depression 18.

The lower side wall 7 comprises a lower projection 19 for supporting a lower face of the coupling unit 16 of the cable end section 8 that is supported by the upper face of the connector part support 5. Similarly, for supporting an upper face of this coupling unit 16, the upper side wall 6 comprises an upper projection 20. Moreover, the lower projection 19 doubles as an upper support for the coupling unit 16 of an adjacent cable end section 8, and the upper projection 20 doubles as a lower support for the coupling unit 16 of an adjacent cable end section 8. As a result, in a stack of modules 2, 3, 4 the upper side and the lower side of each coupling unit 16 are held on both sides, ie, on the side of the upper side walls 6 and the side of the lower side walls 7. The coupling units 16 are supported by the coupling unit support members 19, 20 so that they are movable in the longitudinal direction of the end section 8 of the cable.

Moreover, for supporting the collet 17, the lower side wall 7 comprises a lower collet support member 21 for supporting a lower face of a collet 17 of the cable end section 8 the lower face of which that is supported by the upper face of the connector part support 5, and the upper side wall 6 comprises an upper collet support member 22 for supporting an upper face of the collet 17. Unlike the coupling unit 16, the collet 17 is held in the connector housing 1 in a way that it cannot move in the longitudinal direction of the end section 8 of the cable but is fixed. For this purpose, each the upper 6 and the lower side walls 7 comprises both a forward stop 23 and a backward stop 24 for the collet 17 of the cable end section 8 the lower face of which that is supported by the upper face of the connector part support 5. Moreover, each of the upper 6 and the lower side walls 7 comprises both a forward stop 25 and a backward stop 26 for the collets of an adjacent cable end sections.

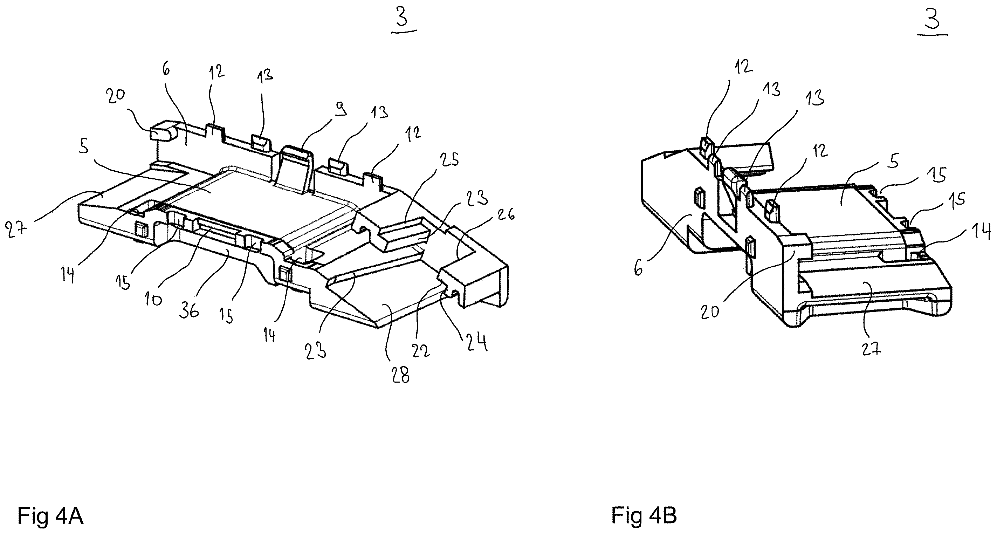

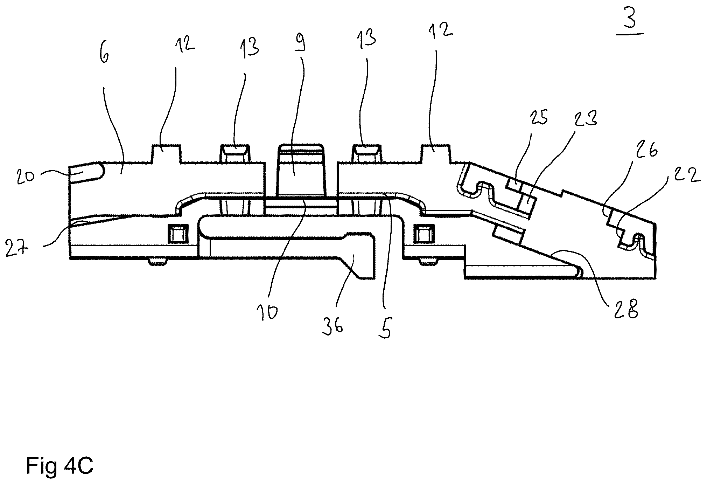

The module at the bottom of the stack of modules in Figures **2B** and **3** and on the top in the inverted stack in **Figure 2C** is a lower end module 3, which is different in design from the stacking module 2 of **Figures 1A** and **1B****.** Details of the lower end module 3 are shown in **Figures 4A, 4B** and **4C****.** Unlike the stacking module 2, the lower end module 3 comprises only one side wall, an upper side wall 6, which at the first side (facing away from the viewer in **Figures 4A** and **4C** and on the left in **Figure 4B**) of the connector part support 5 extends away from the connector part support's 5 upper face.

The exemplary lower end module 3 shown provides one half of a cavity for receiving an end section 8 of a cable, the other half being provided by a stacking module 2 or an upper end module 4 (discussed further below) if the stacking module 2 or the upper end module 4 is stacked on top of the lower end module3. As can be seen in **Figure 2A****,** an end section 8 of an optical flat ribbon cable extends in the cavity formed by the lower end module 3 and the stacking module 2 or the upper end module 4 in the same way as it extends in the cavity formed by two adjacent stacking modules 2; in particular, the upper face of lower end module's 3 connector part support 5 supports the lower face of the cable's end section 8, and the bottom the stacking module 2 or the upper end module 4 supports the upper face of the cable's end section 8.

In the same way as in the stacking module 2, along the first side of the lower end module's 3 connector part support 5 the upper side wall 6 is interrupted to give way for a latching hook 9 of the kind discussed before to snap onto a corresponding latching edge 10 of the stacking module 2 or the upper end module 4 to rigidly assemble the modules. This can be best seen in **Figure 4A****.** As discussed before, the latching hook 9 is provided with a handle edge 11 that is accessible from the outside even after the modules have been assembled so that by operating the handle edge 11, a user can release the snap connection between the latching hook 9 and its corresponding latching edge 10.

In a fashion identical to that of the upper side wall 6 of the stacking module 2, the upper side wall 6 of the lower end module 3 is provided at its distal side with four protrusions, two 12 on the inside and two 13 on the outside of the upper side wall 6, that project away from the upper side wall's 6 distal side as an extension of it. Each protrusion 12, 13 can slide into a corresponding recess 14, 15 of the stacking module 2 or the upper end module 4 stacked on top of the lower end module 3 to improve the rigidity of the assembly. On the second side of the connector part support 5, where the stacking module 2 has a lower side wall, the same recesses 14, 15 are provided as in the stacking module 2 so that into each recess 14, 15 a corresponding protrusion 12, 13 of the stacking module 2 or the upper end module 4 stacked on top of the lower end module 3 can slide to improve the rigidity of the assembly.

Also, in the same way as in the case of the stacking module 2, the lower end module's 3 upper side wall 6 comprises an upper projection 20 for supporting an upper face of a coupling unit 16 of the cable end section 8 the lower face of which is supported by the upper face of the connector part support 5. The upper projection doubles as a lower projection for supporting the coupling unit 16 of an adjacent cable end section 8. From below, the coupling unit 16 is supported by a lower coupling unit support plate 27 that extends from the connector part support 5 and, like the connector part support 5, spreads across the entire width of the lower end module 3. The coupling unit 16 is movable in the longitudinal direction of the end section of the cable 8.

For supporting the collet 17 of the cable end section 8 that is supported by the upper face of the connector part support 5, the upper side wall 6 comprises the same upper collet support member 22 as the stacking module 2. From below, the collet is supported by a lower collet support plate 28 that extends from the connector part support 5 in the direction opposite of that of the lower coupling unit support plate 27 and, like the latter, spreads across the entire width of the lower end module 3.

To contribute to fixing the collet in the housing in a way that it cannot move in the longitudinal direction of the cable end section of the cable but are fixed, the upper side wall 6 has the same forward 23 and backward 24 stops as the stacking module. Moreover, the lower collet support plate 28 has a forward stop 23.

The construction of both the stacking module 2 and the lower end module 3 takes into account that the collet 17 is slightly trapezoidal in the sense that the collet's 17 length, in the longitudinal direction of the cable end section 8, is shorter on the side of the upper side wall 6 than it is on the side of the lower side wall 7. To accommodate for this, the space between the forward stop 23 and the backward stop 24 likewise widens from the side of the upper side wall 6 to the side of the lower side wall 7. Moreover, the proximal side of the lower side wall 7 is lowered below the lower side of the collet 17. As a result, the collet 17 of the cable end section 8 the lower face of which is supported by the upper face of the connector part support 5, can, from the side of the second side of the connector part support 5, be slid into the space between the lower 21, 28 and upper collet support 22 and the forward stop 23 and backward stop 24.

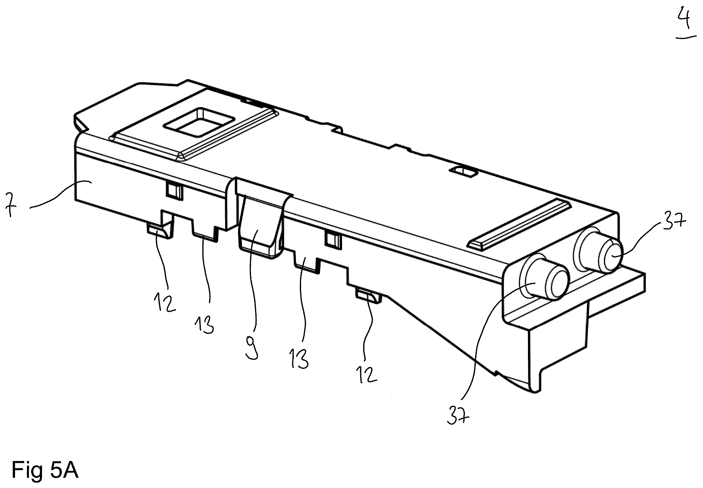

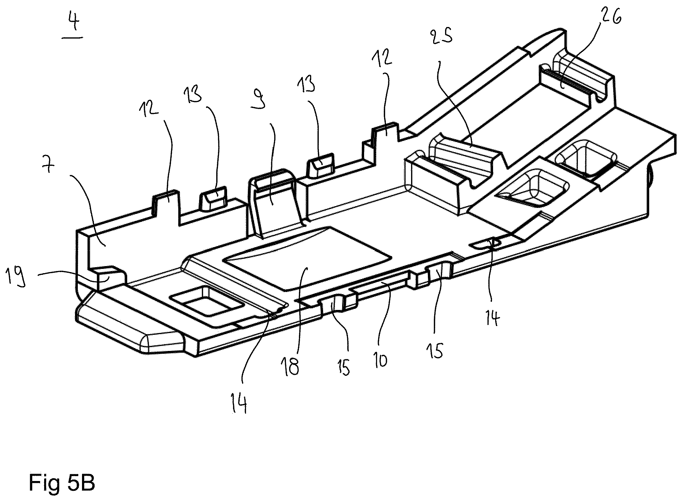

The module at the top of the stack of modules in Figures **2A****,** **2B, 2C** is an upper end module 4, which, too, is different in design from the stacking module 2. Details of the upper end module 4 are shown in **Figures 5A** and **5B****.** The upper end module 4 comprises only a lower side wall 7, which at the second side (facing towards the viewer in **Figures 5A** and away from the viewer in **Figure 5B****)** of the connector part support 5 extends away from the connector part support's 5 lower face.

The upper end module 4 provides one half of a cavity for receiving an end section 8 of a cable, the other half being provided by a stacking module 2 or a lower end module 3 if upper end module 4 is stacked on top of the stacking module 2 or the lower end module 3. As is shown in **Figure 2A****,** an end section 8 of an optical flat ribbon cable extends in the cavity formed by the upper end module 4 and the stacking module 2 or the lower end module 3 in the same way as it extends in the cavity formed by two adjacent stacking modules 2; in particular, the lower face of upper end module's 4 connector part support 5 supports the upper face of the cable's end section 8, and the top of the stacking module 2 or the lower end module 3 supports the lower face of the cable's end section 8.

In the same way as in the stacking module 2, along the second side of the upper end module's connector part support 5 the lower side wall 7 is interrupted to give way for a latching hook 9 of the kind discussed before to snap onto a corresponding latching edge 10 of the stacking module 2 or the lower end module 3 to rigidly assemble the modules. A handle edge 11 of the latching hook 9 is accessible from the outside even after the modules have been assembled so that by operating the handle edge 11, a user can release the snap connection between the latching hook 9 and its corresponding latching edge 10.

Moreover, in a fashion identical to that of the lower side wall 7 of the stacking module 2, the lower side wall 7 of the upper end module 4 is provided at its distal side with four protrusions, two 12 on the inside and two 13 on the outside of the lower side wall 7, that project away from the lower side wall's 7 distal side as an extension of it. Each protrusion 12, 13 can slide into a corresponding recess 14, 15 of the stacking module 2 or the lower end module 3 on top of which the upper end module 4 is stacked, thereby improving the rigidity of the assembly. On the first side of the connector part support 5, where the stacking module 2 has an upper side wall 6, the same recesses 14, 15 are provided as in the stacking module 2 so that into each recess 14, 15 a corresponding protrusion 12, 13 of the stacking module 2 or the lower end module 3 onto which the upper end module 4 is stacked can slide to improve the rigidity of the assembly.

The stacking module's 2 projection 19 in the lower side wall 7 for supporting the lower face of a coupling unit 16 of the cable end section 8 is also present in the lower side wall 7 of the upper end module 4. Moreover, for supporting the collet 17 of the cable end section 8, the lower side wall 7 of the upper end module 4 comprises the same upper collet support member 22 and forward 23 and backward stops 24 as the lower side wall 7 of the stacking module 2.

Alternative lower end and upper end modules not shown in the figures, cannot form the cavities of the lower end and upper end modules discussed above but instead each have a connector part support that can either on its own or in cooperation with an adjacent stacking module - such as the one shown on top in **Figures 1C** and **1D** for the lower end module and the one shown on the bottom in **Figures 1C** and **1D** for the upper end module - fixedly hold one or more connector parts.

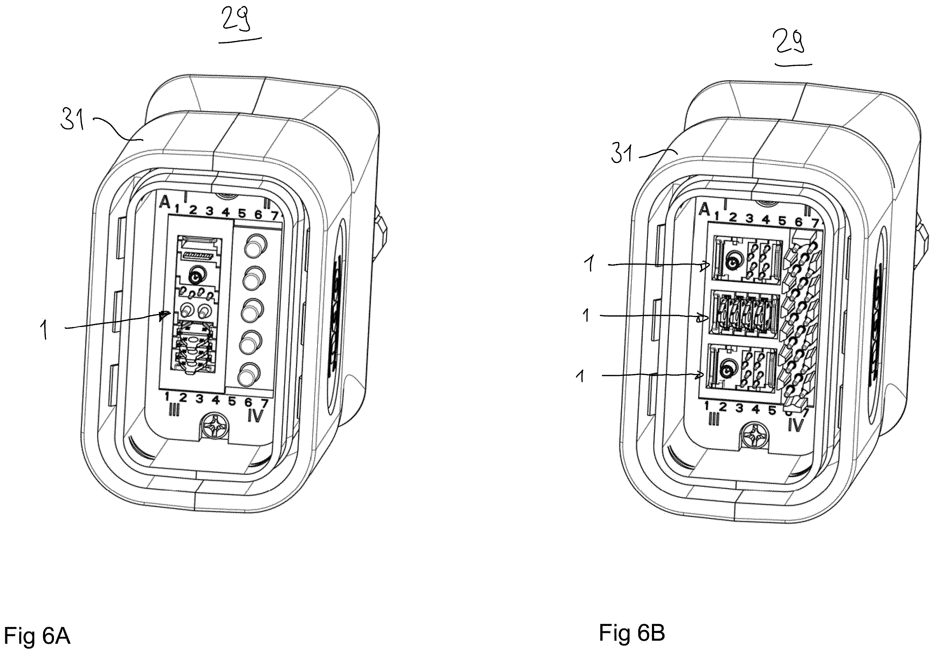

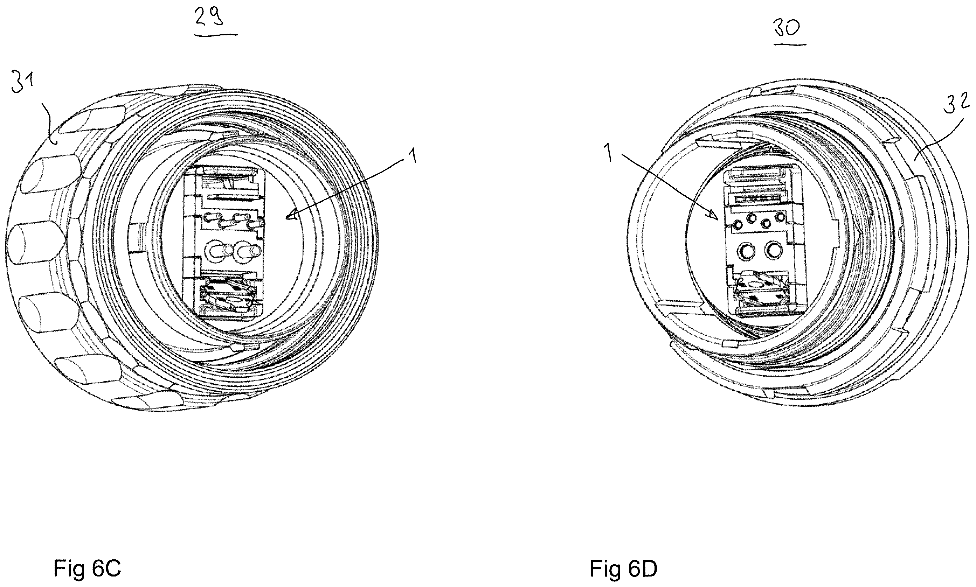

The housing 1 can form a component of a connector 29, 30 by placing it in an outer connector housing 31, 32. Example of male 29 and female connectors 29 are shown in the perspective views in **Figures 6A, 6B****,** **6C** and **6D****.** In **Figure 6A****,** the housing 1 of **Figures 2A** to **2C** is inserted together with a device comprising five contact pins for providing electrical power in an outer connector housing 31. Similarly, in **Figure 6AB** three housings 1 are inserted together with a device comprising 20 signal pins in an outer connector housing 31. **Figures 6C and 6D** show a male and a matching female connector respectively, each having a housing 1 with male and female connector parts, respectively, inserted in a male 31 and female outer connector housing 32, respectively. To ensure that the connector parts of the female connector 29 are reliably connected to the connector parts of the male connector 30, when the two connectors 29, 30 are assembled, in each outer connector housing 31, 32 the connector housing 1 is biased in the direction towards the front of the connector housings, ie the connector face where the connector 29, 30 meets its matching connector 30, 29 by means of springs 33, 34. In each connector 29, 30, the connector housing 1 is slidably arranged in the outer connector housing 31, 32, and the springs (not shown) exerts a force between the outer connector housing 31, 32 and the connector housing 1 to bias it in the direction of the connector face. The springs sit on biasing noses 37 of the upper end module 4 shown in **Figure 5A****.**

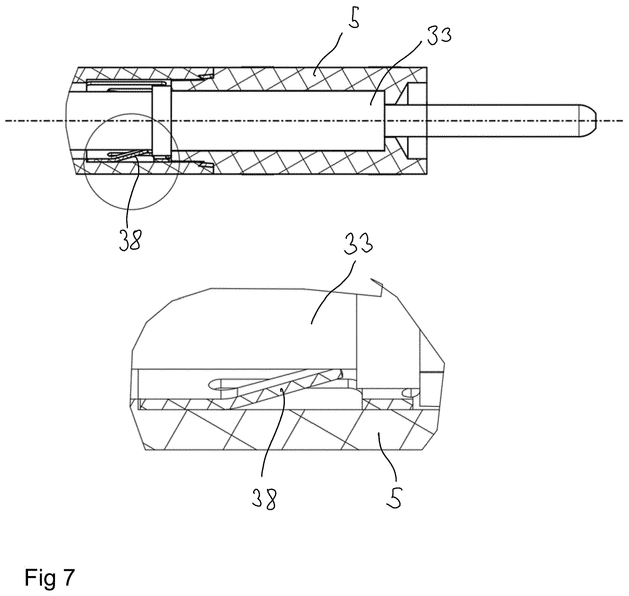

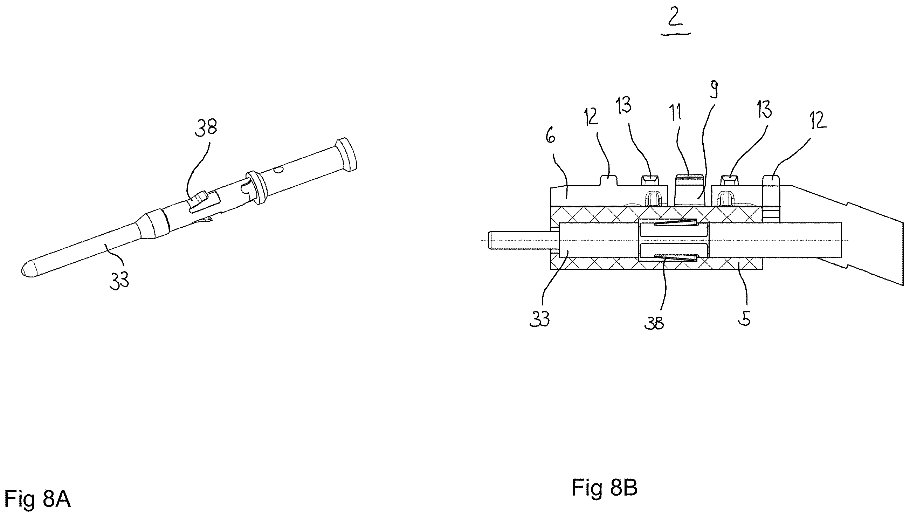

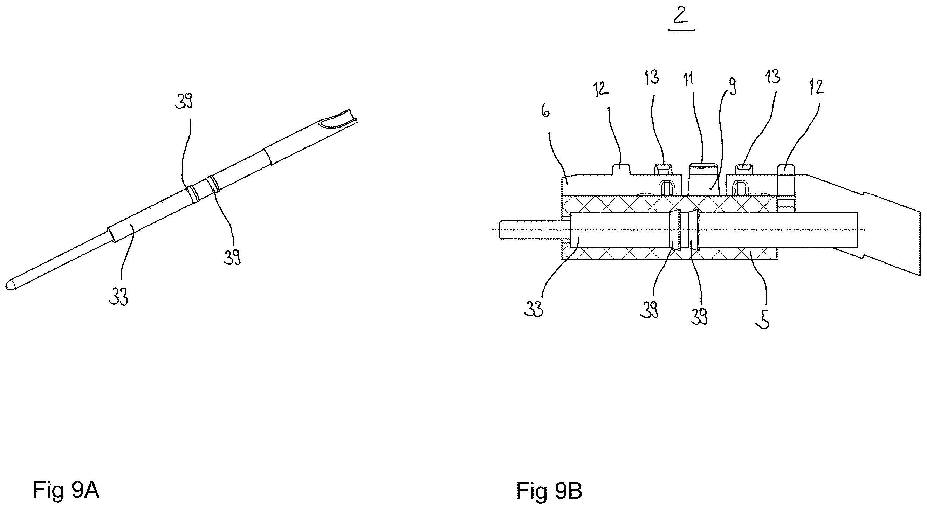

**Figures 7 to 9B** show various modes of anchoring contact pins in a connector part support 5. The contact pin in **Figure 7** has an annular section in which its radius is greater than in adjacent sections of the contact pin, producing a pair of shoulder. With one shoulder (on the right in the figure), the contact pin abuts against a corresponding shoulder in the through hole of the connector prat support 5. With the other shoulder it abuts against a projection of the connector part support 5. The projection is an inwards-bent tongue 38 of an annular metal ring in an annular grove inside the through hole of the connector part support 5. **In** **Figures 8A and 8B****,** conversely, the electrical contact pin is provided with two projections formed by outwards-bent tongues 38 of an annular metal ring on the electrical contact pin. Finally, the contact pin in **Figures 9A and 9B** has two annular barbs 39 on its outside to anchor themselves in the surface of a through hole of the connector part holder or a groove of the connector part support 5.

The features as described in the above description, claims and figures can be relevant individually or in any combination to realise the various embodiments of the invention.

### Reference numerals

- 1: connector housing
- 2: stacking module
- 3: lower end module
- 4: upper end module
- 5: connector part support
- 6: upper side wall
- 7: lower side wall
- 8: end section
- 9: latching hook
- 10: latching edge
- 11: handle edge
- 12: protrusion
- 13: protrusion
- 14: recess
- 15: recess
- 16: coupling unit
- 17: collet
- 18: shallow depression
- 19: lower projection
- 20: upper projection
- 21: lower collet support member
- 22: upper collet support member
- 23: forward stop
- 24: backward stop
- 25: forward stop
- 26: backward stop
- 27: lower coupling unit support plate
- 28: lower collet support plate
- 29: male connector
- 30: female connector
- 31: male outer connector housing
- 32: female outer connector housing
- 33: electrical contact pin
- 34: electrical bushing
- 35: coaxial connector part
- 36: edge card
- 37: biasing nose
- 38: tongue
- 39: barb

## Claims

1. A stacking module (2) for a connector housing (1) which can be assembled with one or more other stacking module(s) (2) in a stack to form the connector housing (1), the stacking module (2) comprising a connector part support (5) with an upper face and a lower face, wherein at a first side of the connector part support (5) an upper side wall (6) extends away from the connector part support's (5) upper face, and/or at a second side of the connector part support (5) a lower side wall (7) extends away from the lower face of the connector part support (5), and wherein a first fastener and a first counter fastener are provided at one of the first and a second sides of the connector part support (5).

2. The stacking module (2) of claim 1, **characterised in that** the connector part support (5) is a connector part holder that fixedly holds one or more connector parts (33, 34, 35, 36).

3. The stacking module (2) of claim 1, **characterised in that** the connector part support can support one or more connector parts (33, 34, 35, 36) from the top or the bottom and can cooperate with another stacking module (2) that can support the one or more connector parts (33, 34, 35, 36) from the bottom or the top, respectively, to fixedly hold the one or more connector parts (33, 34, 35, 36).

4. The stacking module (2) of any one of claims 2 or 3, **characterised in that** the connector part support (5) is provided with protrusions to anchor the connector part (33, 34, 35, 36) in the connector part support (5) by form fit or press fit.

5. The stacking module (2) of any one of claims 2 to 4, **characterised in that** the connector part support comprises a shoulder to cooperate with at least one resilient tongue of the connector part (33, 34, 35, 36) to anchor the connector part (33, 34, 35, 36) in the connector part support (5) or in a combination of adjacent connector part holders that cooperate to fixedly hold the one or more connector parts (33, 34, 35, 36).

6. A set of at least one stacking module (2) according to any one of claims 1 to 5 and at least one connector part (33, 34, 35, 36), **characterised in that** the connector part is from the group comprising an electrical contact pin (33), an electrical contact bushing (34), an edge card (36), edge card receiving spring contacts, a coaxial connector part (35), a mating part of an optical fibre contact and a mating part of a fluid conduit.

7. The stacking module (2) of any one of the preceding claims, **characterised in that** at a first side of the connector part support (5) an upper side wall (6) extends away from the connector part support's (5) upper face, and at the second side of the connector part support (5) opposite at least parts of the upper side wall (6), the connector part support (5) is at least partly open, and/or at a second side of the connector part support (5) a lower side wall (6) extends away from the connector part support's (5) lower face, and at the first side of the connector part support (5) opposite at least parts of the lower side wall (6), the connector part support (5) is open.

8. The stacking module (2) of claim 1, **characterised in that** at a first side of the connector part support (5) an upper side wall (6) extends away from the connector part support's (5) upper face, and at a second side of the connector part support (5) a lower side wall (7) extends away from the lower face of the connector part support (5).

9. The stacking module (2) of any one of the preceding claims, **characterised in that** a second fastener and a second counter fastener are provided at the other of the first and the second side of the connector part support (5).

10. The stacking module (2) of any one of the preceding claims, **characterised in that** one of the first or second fastener and the first or second counter fastener, respectively, is a latching hook (9) and the other of the first or second fastener and the first or second counter fastener, respectively, is a latching edge (10) so that the latching hook (9) of the module can cooperate with the latching edge (10) of the second module to assemble the module with the second module.

11. The stacking module (2) of any one of the preceding claims, **characterised in that** one of the first side and the distal edge of the upper side wall (6) is provided with a protrusion (12, 13) and the other of the first side and the distal edge of the upper side wall (6) is provided with a recess (14, 15) so that the protrusion (12, 13) or recess (14, 15) of the stacking module (2) can cooperate with the recess (12, 13) or protrusion (14, 15) of another stacking module (2) when stacking module (2) are assembled.

12. A lower end module (3) for a connector housing (1) which can be assembled with a stacking module (2) according to one of claims 1 to 14 and 16, the lower end module (3) comprising a connector part support (5) with a upper face, wherein at a first side of the connector part support (5) an upper side wall (6) extends away from the connector part support's (5) upper face, **characterised in that** a first fastener is provided at one of the first side and a second side of the connector part support (5) so that the first fastener of the lower end module can cooperate with the first counter fastener of the stacking module (2) to assemble the lower end module (3) with the stacking module (2).

13. An upper end module (4) for a connector housing (1) which can be assembled with a stacking module (2) according to one of claims 1 to 15 to form the connector housing (1), the upper end module (4) comprising a connector part support (5) with a lower face, wherein at a second edge of the connector part support (5) a lower side wall (7) extends away from the connector part support's (5) lower face, **characterised in that** a second fastener is provided at one of the second edge and a first edge of the connector part support (5) so that the second fastener of the upper end module (4) can cooperate with the second counter fastener of the stacking module (2) to assemble the upper end module (4) with the stacking module (2).

14. A set for assembling a connector housing (1), the set comprising at least two stacking modules (2) of any one of claims 1 to 14, or at least two modules of the group of modules comprising a stacking module (2) of any one of claims 1 to 14, a lower end module (3) of claim 12 and an upper end module (4) of claim 13.

15. A connector housing (1) assembled from a set of claim 14.
